# EUROPEAN PATENT APPLICATION

(11) **EP 2 418 736 A1**
(43) Date of publication of application: **15.02.2012**
(21) Application number: 09386025.2
(22) Date of filing: 23.09.2009
(51) Int. Cl.: H01R 4/02, H01R 4/38, H02G 7/05

(54) **A method improving the electrical performance of the connections of the various elements in the electric power systems**

(30) Priority: 25.09.2008 GR 20080100611
(71) Applicant: Messaritis, Fotios, 113 64 Athens (GR); Thalassinakis, Emmanouil, 713 07 Heraklion Kritis (GR)
(72) Inventor: Messaritis, Fotios, 113 64 Athens (GR); Thalassinakis, Emmanouil, 713 07 Heraklion Kritis (GR)

(57) **Abstract**

The method proposes a new way of connecting the various elements of the electric networks (e.g. current conductors, bars, isolators, switches, surge arresters etc). The method is based on the principle that the connections of the elements of the power systems serve two different tasks: a good electrical transit resistance and a resistant mechanical connection. Therefore, the respective connections have to be considered as consisted of two parts that are materialized by separate components. The first one is the mechanical contact that should withstand the operating mechanical distresses and also protect the sensitive electric contact from any mechanical distress and the second is the electric contact that is dedicated to keep a low transit resistance and also remain unaffected by the environmental factors (corrosion etc).

In order to achieve a good electric contact between current conductors or other power elements, a metal welding method and preferably the exothermic welding process is used. In order to achieve a resistant mechanical contact which protects the more sensitive electric contact from any mechanical distress, a suitable arrangement of clamps is used.

## Description

### Technical field

The present invention refers to the way of connecting the various power elements (e.g. current conductors, bars, isolators, switches, surge arresters etc) that are used in the electric networks of the power systems and particularly at the outdoor installations where the operating and environmental factors are more intensive resulting to the contact's gradual ageing and deterioration.

### Prior art

Aluminum and copper alloys are the materials mostly utilized for manufacturing current conductors and other power elements that are used for the installations of the electric power networks. In order to build the installations it is necessary to connect together pieces of current conductors or other power elements (e.g. isolators, bars, switches, surge arresters etc). Therefore, the power networks of all voltage levels (from 0.4kV up to extra high voltage) contain a grate number of contacts. The number of contacts in the outdoor installations of an electric power network of a medium sized European country is in the range of many millions.

These contacts are materialized by the use of clamps or simply by steel bolts in certain cases as they are the bus bars. The task of these clamps is twofold. First, they have to achieve a good mechanical contact which can withstand the various mechanical distresses, (tension, vibrations, electric-magnetic forces during the short circuits etc.) and second, they have to guarantee a good electric contact by keeping a low transit resistance.

The existing today clamps have various sizes and forms depending on their use and usually they consist of two main parts having special cavities where the terminal ends of current conductors or power elements to be connected are installed. Then, the two parts of the clamp are well tightened by the use of proper steel bolts. The purpose is to achieve a good physical contact and pressure between the metal surfaces in order to minimize the transit resistance for the current that is flowing through, during the operation of the network. The transit resistance of a new contact has a very low value, usually ranging in the scale of tenths of µΩ.

However, the continual exposure of the contact to aggressive operating and environmental conditions results to its gradual ageing and deterioration. The contact experiences a wide range of temperatures (between day and night, summer and winder, low and high load demand) which implies its cascade expansion and contraction and the result is the gradual looseness of the metal parts of the contact. Thereupon, the electrical contact is deteriorated and its transit resistance is substantially increased. Moreover, due to its looseness, atmospheric air, humidity, dust and contamination can penetrate the contact and corrode the contacting surfaces that are made from aluminum or copper alloy. Hence, aluminum oxide or copper oxide is formed on the contacting surfaces and these materials have isolating properties therefore, the electric contact is getting even worse. As the electric contact is getting worse, the heat of the Joule losses is increased; rising even more the temperature of the contact.

The final stage of the above feedback procedure is that the temperature of the contact due to the Joule effect reaches a critical level that is higher than the melting point of the aluminum or copper alloy and the metal surfaces start melting. This is dangerous particularly for the outdoor networks (overhead lines, etc.) as the incandescent melting metal is dropping down to the ground.

The method that is used up to now for avoiding this phenomenon is the attentional and expensive preventive maintenance of the network by using infrared radiation cameras that can detect the bad hot-contacts and replacing them before they start melting. However, this method being time consuming it is not effective, neither absolute safe for three main reasons. First, the outdoor networks contain a huge number of contacts that are impossible all to be inspected every year, while just one bad contact is enough to create a serious problem. Second, the application of the existing method, based on the use of camera gives reliable results only when the transit current during the inspection is significant, as the Joule heat of the contact is proportional to the square of the transit current. If the load demand during the inspection is low and therefore, the transit current of the contact is small, the results are not reliable. Third, even a partly deteriorated contact could create drops of melting metal during a short circuit which takes place on another point of the network creating a high current, sometimes up to 100 times more than the normal one that flows the contact. This current causes a Joule power, dissipated from the contact that is 10000 times higher than the one under normal operating conditions. Although the high current lasts for a short time interval (milliseconds up to seconds) due to the activation of the protection system that isolates the faulted part of the network, it is enough to raise the temperature of the partly deteriorated contact and melt it creating some drops of liquid metal.

It should be noticed that the problem of aged contacts becomes more severe due to the electric market liberalization which results to a higher loading of the networks for economic and competition reasons.

### Disclosure of the invention

The purpose of the present invention is to achieve good electric contact in the connections of various components of the electric networks. The goal is the electric contacts to remain relatively unaffected by the operating and environmental distresses and not to appear the usual corrosion or looseness problems that the existing mechanical connections appear.

The proposed method is based on the principle that the connections of the components of the networks serve two different tasks: a good electrical transit resistance and a resistant mechanical connection. Therefore, the respective connections have to be considered as consisted of two pars that will be materialized by two separate components. The first one is the mechanical contact that should withstand the operating mechanical distresses and also protect the sensitive electric contact from any mechanical distress and the second one is the electric contact that is dedicated to keep a low transit resistance and also remain unaffected by the environmental factors (corrosion, looseness etc.).

In order to achieve a good electric contact between current conductors or other network components (isolators, switches, surge arresters etc) any metal welding method can be utilized and particularly, the exothermic welding process that has some characteristics that make it favorable for this use as it is explained in the following paragraph. By metal welding the electric contact that is achieved has excellent electric properties and moreover, it is corrosion resistant during its life operation. In order to maintain a good mechanical contact that can protect the more sensitive electric contact, a suitable arrangement with clamps is used. The proposed method can be applied either on the existing mechanical connections (clamps) or on the new installations.

The process of the metal exothermic welding is an easy used, fast method that needs no external power or gross devices. Therefore, it is favorable to be used in order to make the electric contacts up on the outdoors networks. In this process inert mixture of metallic powders and metallic oxides are placed into a high temperature mold. When ignited (often with a powder containing a much finer mixture of aluminum and copper oxide) a highly exothermic reaction take places that produces liquid copper or liquid aluminum alloy which is directed to the weld cavity in the mold where the terminals of the elements to be connected are also placed and the liquid metal fills the available space completing the weld.

The invention solves the very serious corrosion and deterioration problem of the contacts which is inevitable in the clamps that are used today due to the influence of the operating and environmental factors. The ultimate and very severe goal that is achieved by the proposed method is to avoid the dangers from the falling drops of the melting cupper or aluminum alloy due to the high temperature of the deteriorated conducting surfaces. On the other hand, the application of the method releases from the time consuming work of the every year inspection and maintenance of the grate number of contacts any electric network.

Moreover, the method offers significant economic benefits. For instance, let's consider a medium voltage metal glad bay of a step down transformer 150kV/20kV, 50 MW, operating near to its nominal current that is about 1400A. These metal glad bays contain about 10 contacts per phase. Assuming that all contacts have been deteriorated by the years of operation and their transit resistance has increased from 10µΩ to 500µΩ then, the total dissipated heat is estimated to have changed from 0.6kW to 29.4kW that is, an additional, lost power equal to 28.8kW. During one year of operation, the above dissipated power implies a lost of energy equal to 252288kWh. Assuming that 1KWh costs 0.1€, the cost of the annual lost of energy due to the deteriorated contacts f just one bay comes up to the amount of 25 228€.

Here are some examples of the application of the method. Two different cases are distinguished, first, the existing installations and second, the new installations.

Concerning the existing installations where the electric contact is probable to be already deteriorated, the method can be used, among other ways, according to the following.

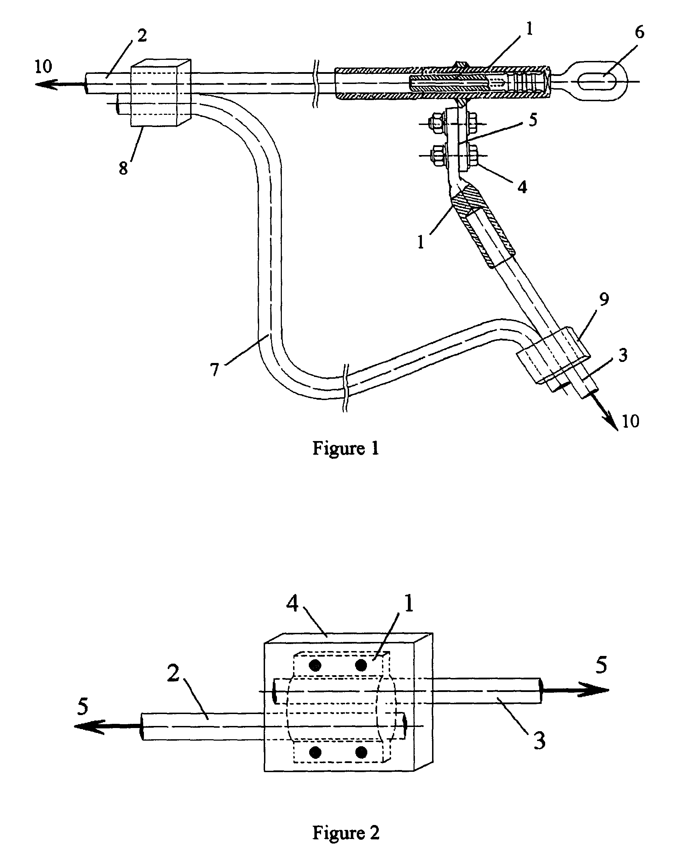

As it shown in Fig 1, a by pass current path is created by using a piece of conductor which terminals are welded on both sides of the existing mechanical contact (clamp). Therefore, an excellent electric path is achieved parallel to the existing mechanical contact. The two electric contacts of the by pass conductor are made by using any metal welding method and preferably by the exothermic welding process. The existing clamp continues to operate as a resistant mechanical contact that can undertake any mechanical stress. This arrangement ensures that the sensitive electric contacts are not mechanically stressed while, from the electric point of view, it is no matter the surface condition of the mechanical contact as there is an excellent parallel path for the current transmission. For instance, let's consider that the transit resistance of the mechanical contact (clamp) has increased up to the range of tenths of mΩ due to its aging while the transit resistance of the welded electric contacts is in the range of tenths µΩ that is 1000 times less. Then, the current flowing through the mechanical contact is 500 times less than the current that flows each one of the two welded electric contacts and therefore, the Joule effect in the mechanical contact is insignificant.

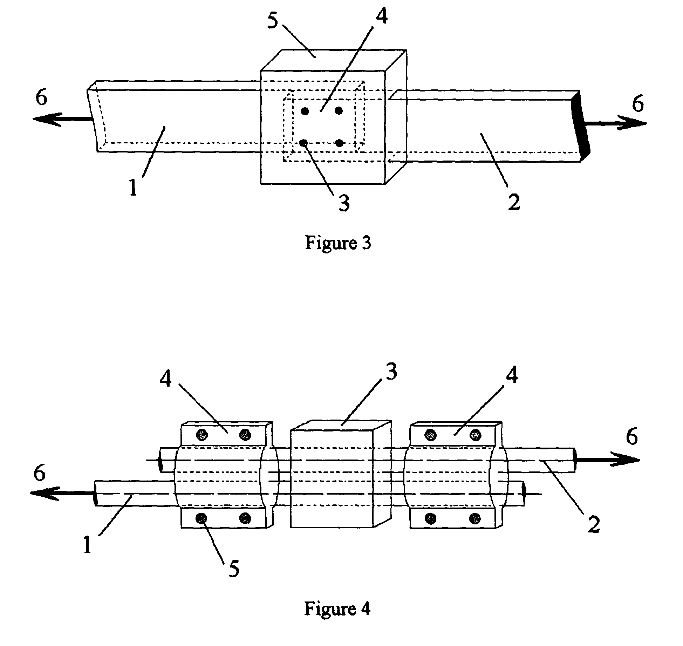

Fig 2 and 3 show an other way that the method can be implemented where a sarcophagous enclosing partly or the whole of the deteriorated mechanical contact as well as a part of the conductor, has been made by using a metal welding method and preferably the exothermic welding process. Therefore, a very good and corrosion-resistant electric contact is formed outside the existing mechanical contact.

Concerning the new installations, the method can be used either as it was applied on the existing installations (Figs 1, 2 and 3) or as it is shown in Fig. 4. According to Fig. 4, the first step is to make the mechanical contact by mounting suitable clamps at one or both sides of the point that the electric contact will be made in order to support the conductors for the welding and protect the electric contact from any mechanical distress. The second step is to make the electric contact by using a metal welding method or preferably the exothermic welding process.

### Detailed description of the drawings

Fig. 1 referrers to conductors connection used on the terminal towers of the high voltage transmission lines. The existing technique is to use a mechanical connection (clamp) 1 in order to connect the two current conductors 2 and 3. This clamp consists of two main parts that are tightly pressed by the use of proper steel bolts 4 in order to achieve the mechanical contact 5. The clamp is also equipped by a proper hook 6 that can be hung up on the tower via an insulator string. According to the proposed method, a piece of conductor 7 is used parallel to the existing clamp 1 in order to make a by pass path for the operating current. This piece of conductor 7 is weld on both of its ends to the conductors 2 and 3 respectively by the use of a metal welding method and preferably by the exothermic welding process. Therefore, the two electric contacts 8 and 9 have been materialized. The arrows 10 depict the distress forces during the operation.

Fig. 2 referrers to an existing and deteriorated contact that is made by the clamp 1 which connects the conductors 2 and 3 and this clamp is difficult or time consuming to be removed due to the oxidation. According to the proposed method, a sarcophagous 4 is made by using a metal welding method and preferably the exothermic welding process and this sarcophagous encloses partly or wholly the deteriorated mechanical contact and a part of the conductors 2 and 3. The arrows 5 depict the distress forces during the operation.

Fig. 3 referrers to bus bars connection used for the metal glad bays of the medium voltage switchgear. The existing technique is to connect the two bars 1 and 2 by using steel bolts 3 which achieve the mechanical contact 4. According to the proposed method, a sarcophagous 5 is made by the exothermic welding process that covers the mechanical contact and succeeds the good electric contact. The arrows 6 depict the distress forces during the operation.

Fig. 4 referrers to the current conductors 1, 2 connection where the electric contact 3 is made by using by a metal welding method and preferably the exothermic welding process. Also, two mechanical connections are made by using proper clamps 4 with bolts 5 on both sides of the electric contact in order to protect it. The arrows 6 depict the distress forces during the operation.

## Claims

1. Method that materializes the connections of various elements of the electric networks (e.g. current contactors, isolators, bars, switches, surge arresters etc) with two separate components, first, the mechanical contact dedicated to withstand the operating mechanical stresses and second, the electric contact dedicated to keep a low transit resistance.

2. Method according to claim 1, wherein the mechanical contact is made by a suitable arrangement of clamps in order to protect the electric contact from any mechanical distress while the electric contact is materialized by any metal welding method.

3. Method according to anyone of claims 1 and 2, wherein the electric contact is materialized by the exothermic welding process.

4. Method according to anyone of claims 1 to 3, wherein a by pass conductor is installed parallel to the mechanical clamp and the exothermic welding process or another metal welding method is used to weld the conductor ends on both sides of the clamp.

5. Method according to anyone of claims 1 to 3, wherein the electric contact is achieved by a sarcophagous enclosing the mechanical contact which is made by using a metal welding method and preferably the exothermic welding process and this sarcophagous encloses partly or wholly the deteriorated mechanical contact as well as a part of the connected conductors.

6. Method according to anyone of claims 1 to 3, wherein the first step is to make the mechanical contact by mounting suitable clamps at one or both sides of the point that the electric contact will be made in order to support the conductors for the welding and protect the electric contact from any mechanical distress. The second step is to make the electric contact by using a metal welding method or preferably the exothermic welding process.

## Amended claims

### Amended claims in accordance with Rule 137(2) EPC.

**1.** Method for achieving operationally safe and pollution resistant connections of existing adjacent bare (not isolated) element terminals (no cables, neither GIS being considered) of the electric power networks of all voltage levels (from 400V up to extra high voltage), such as the terminals of current conductors, bars, switches, transformers, surge arresters, etc, already connected by mechanical clamps and/or bolts, said method being **characterized by**:
• the use of exothermic metal welding process on the power networks (towers of 30 to 50m high, power transformers, etc) where a source of power or heat is not usually available for welding the existing deteriorated or new contacts.
• the exothermic metal welding used especially for aluminum-copper alloy materials being utilized in the mentioned power elements (ACSR conductors, terminals, etc).
• creating a safe electric contact by metal welding the two contacting parts of the clamp and/or one part of the clamp and one terminal of a power element or the terminals of adjacent power elements.
• the above safe electric contact being constructed in the form of a seam or a sarcophagus enclosing the whole mechanical contact (which mechanical contact is difficult to be disassembled and cleaned when oxidized) or enclosing part of it.

**2.** Use of the method for the construction and maintenance of electric networks.
